# EUROPÄISCHE PATENTSCHRIFT

(11) **EP 1 284 211 B1**
(45) Veröffentlichungstag und Bekanntmachung des Hinweises auf die Patenterteilung: **08.10.2008**
(21) Anmeldenummer: 02014381.4
(22) Anmeldetag: 28.06.2002
(51) Int. Cl.: B60J 7/20

(54) **Kraftfahrzeug mit einem beweglichen Dach**
Motor vehicle with movable roof
Véhicule automobile avec toit amovible

(30) Priorität: 17.08.2001 DE 10140434
(43) Veröffentlichungstag der Anmeldung: 19.02.2003
(73) Patentinhaber: Dr. Ing. h.c. F. Porsche Aktiengesellschaft, 70435 Stuttgart (DE)
(72) Erfinder: Beierl, Dominik, 70825 Korntal-Münchingen (DE)

(56) Entgegenhaltungen:
- DE-C- 4 445 941
- US-A- 5 655 331
- US-B1- 6 254 165

## Beschreibung

Die Erfindung bezieht sich auf ein Kraftfahrzeug mit einem beweglichen Dach, gemäß Oberbegriff des Anspruchs 1.

Ein gattungsbildendes Fahrzeug ist in der EP 0 949 105 A1 beschrieben. Dieses Fahrzeug umfasst ein bewegliches Dach, das einen vorderen Dachabschnitt und einen Heckabschnitt besitzt. Das Dach überspannt in Schließstellung einen Fahrgastraum und ist ferner in eine heckseitige Ablagestellung bewegbar, in der es von einem nach oben offenen Ablageraum aufgenommen wird, der allerdings durch einen schwenkbaren Deckel verschließbar ist. An dem Deckel ist eine in den Fahrgastraum ragende Ablagekonsole schwenkbar derart angeordnet, dass diese nach unten weggeklappt werden kann, wodurch bei geschlossenem Dach ein Öffnen des Deckels entgegen der Fahrtrichtung ermöglicht wird. Nachteilig bei diesem Kraftfahrzeug ist, dass für die Schwenkbewegung der Ablagekonsole ein Antrieb bereit gestellt werden muss.

Es ist daher Aufgabe der Erfindung, ein Kraftfahrzeug der eingangs genannten Art zu schaffen, bei dem ein einfaches und zuverlässiges Ablegen des Daches gegeben ist.

Gelöst wird diese Aufgabe mit einem Kraftfahrzeug, welches die in Anspruch 1 genannten Merkmale aufweist. Weitere, die Erfindung ausgestaltende Merkmale enthalten die Unteransprüche.

Die mit der Erfindung hauptsächlich erzielten Vorteile sind darin zu sehen, dass auf einen Antrieb für die Ablagekonsole verzichtet werden kann, wodurch sich ein störungsunanfälliger bzw. funktionssicherer Dachaufbau ergibt. Außerdem kann der auch als Verdeckkasten bezeichnete Ablageraum hinsichtlich seiner Größe optimiert und auf die Abmessungen des abgelegten Daches abgestimmt werden, da innerhalb des Verdeckkastens kein freier Schwenkbereich für die Ablagekonsole benötigt wird.

Bei einer im Anspruch 4 angegebenen Weiterbildung der Erfindung ist vorteilhaft, dass mit dem Deckel sowohl der Verdeckkasten als auch ein heckseitiger Aufnahmeraum verschlossen und freigegeben werden können, wobei dieser Aufnahmeraum bei einer bevorzugten Ausführungsform des Kraftfahrzeugs dessen Antriebsmaschine aufnimmt.

Nach einer in Anspruch 5 angegebenen Ausführungsvariante wird erreicht, dass bei vom Stützrahmen entkoppelter Deckelaußenhaut der Zugang zu dem Aufnahmeraum freigebbar ist, ohne die Ablagekonsole und das Heckteil des Daches zu bewegen.

Bevorzugt wird ein Ausführungsbeispiel eines Kraftfahrzeugs, bei dem der Heckabschnitt eine starre Heckscheibe, beispielsweise Festglasscheibe, umfasst, die bei geschlossenem Dach unter den vorderen Dachabschnitt verlagerbar ist, wie dies in Anspruch 6 angegeben ist. Ein derartiges Dach mit einem starren Dach- und Heckabschnitt ist in der DE 197 55 254 A1 angegeben. Durch das Verschieben der Heckscheibe wird der Schwenkbereich für die Ablagekonsole freigegeben, so dass der Deckel für das Ablegen des Daches entgegen der Fahrtrichtung geöffnet werden kann. Denkbar ist es allerdings auch, das Kraftfahrzeug mit einem beweglichen Dach aus einem faltbaren Verdeck auszustatten. Derartige Faltverdecke besitzen üblicherweise einen heckseitigen Spannbügel, der dem Heckabschnitt zugeordnet und schwenkbeweglich am Fahrzeugaufbau angelenkt ist. Somit ist es möglich, den Spannbügel nach oben bzw. entgegen der Fahrtrichtung wegzuschwenken, wodurch der Schwenkbereich für die Ablagekonsole freigegeben wird.

Die Erfindung wird nachfolgend anhand eines Ausführungsbeispiels mit Bezug auf die Zeichnung näher erläutert.

Es zeigen:
- Fig. 1: in perspektivischer Seitenansicht ausschnittweise ein Kraftfahrzeug mit entgegen der Fahrtrichtung geöffnetem Deckel und
- Fig. 2: das Kraftfahrzeug nach Fig. 1, wobei der Deckel in Fahrtrichtung verschwenkt geöffnet wiedergegeben ist.

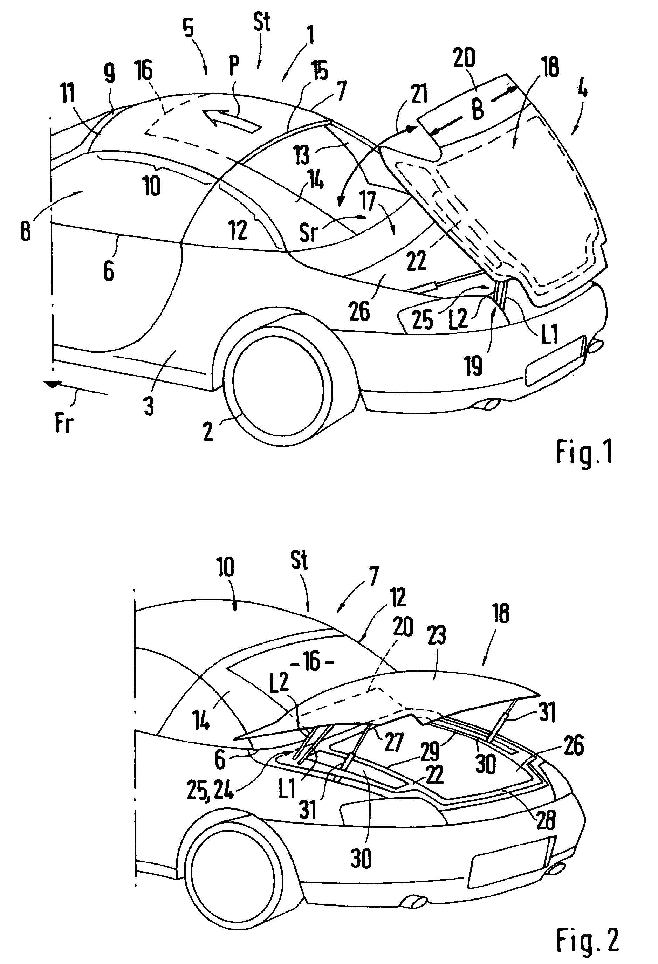

Ein in Fig. 1 wiedergegebenes Kraftfahrzeug 1, beispielsweise Personenwagen, besitzt einen von Rädern 2 getragenen Aufbau 3, von dem ein Heckteil 4 und ein Mittelteil 5 zu sehen sind. Oberhalb einer Gürtellinie 6 des Aufbaus 3 ist ein bewegliches Dach 7 angeordnet, das in Schließstellung St einen Fahrgastraum 8 überspannt und sich dabei von einem oberen Windschutzscheibenrahmenquerteil 9 bis zur Gürtellinie 6 im Heckteil 4 erstreckt. Das Dach 7 besitzt einen vorderen Dachabschnitt 10, welcher in der Schließstellung St mit seiner Vorderkante 11 mit dem Windschutzscheibenrahmenquerteil 9 abschließt. Überdies umfasst das Dach 7 einen Heckabschnitt 12, der sich an den vorderen Dachabschnitt 10 anschließt und Seitenteile 13 und 14 umfasst, die C-Säulen des Fahrzeugs 1 bilden. Dachabschnitt 10 und Heckabschnitt 12 können schwenkbar miteinander verbunden sein. Der Heckabschnitt 12 liegt zwischen der Hinterkante 15 des vorderen Dachabschnitts 10 und der Gürtellinie 6 im Heckteil 4, wenn das Dach 7 in seiner Schließstellung St ist. Zwischen den beiden Seitenteilen 13 und 14 ist - gemäß Fig. 2 - eine Heckscheibe 16 angeordnet, die Bestandteil des Heckabschnitts 12 ist und an dessen Seitenteilen 13 und 14 verschieblich geführt wird, so dass sie - wie in Fig. 1 gestrichelt dargestellt - nach vorn (Pfeil P) in Fahrtrichtung Fr unter den vorderen Dachabschnitt 10 und umgekehrt geschoben werden kann.

Im Heckteil 4 des Kraftfahrzeugs 1 ist ein Ablageraum für das Dach 7 ausgebildet, der somit als Verdeckkasten 17 dient und sich hinten an den Fahrgastraum 8 anschließt. Der Verdeckkasten 17 ist nach oben hin mit einem Deckel 18 verschließbar, der vor dem Ablegen 17 des Daches 7 im Verdeckkasten 17 entgegen der Fahrtrichtung Fr um ein hinteres Schwenklager 19 nach Art einer Klappe geöffnet werden kann. Eine Ablagekonsole 20 ist fest, d.h. im Wesentlichen unbeweglich relativ zum Deckel 18, mit dem Deckel 18 verbunden und ragt - bei geschlossenem Deckel 18 - in den Fahrgastraum 8 hinein und bildet so beispielsweise eine Hutablage. Damit der Deckel 18 aufgeklappt bzw. der Verdeckkasten 17 - wie in Fig. 1 zu sehen - entgegen der Fahrtrichtung Fr geöffnet werden kann, um das Dach 7 ablegen zu können, wird zumindest ein Teil des Heckabschnitts 12 teilweise aus dem Schwenkbereich 21 der Ablagekonsole 20 wegbewegt. Bei der gezeigten Ausführungsform des Daches 7 wird mithin bei zu öffnendem Verdeckkasten 17 die Heckscheibe 16 durch Verschieben unter den vorderen Dachabschnitt 10 aus dem Schwenkbereich 21 für die Ablagekonsole 20 herausverlagert. Anschließend kann der Deckel 18 entgegen der Fahrtrichtung Fr um das hintere Schwenklager 19 aufgeklappt werden. Die Ablagekonsole 20 kann bei geschlossenem Deckel 18 einen hinter den hier nicht dargestellten Fahrzeugsitzen liegenden Stauraum Sr verschließen.

Wie aus Fig. 2 hervorgeht, umfasst der Deckel 18 einen innenliegenden Stützrahmen 22 und eine Deckelaußenhaut 23, die über ein vorderes Schwenklager 24 an dem Stützrahmen 22 angelenkt ist, so dass die Deckelaußenhaut 23 in Fahrtrichtung Fr klappenartig geöffnet werden kann. Der Stützrahmen 22 ist über das hintere Schwenklager 19 mit dem Aufbau 3 verbunden. Die Schwenklager 19 und 24 werden vorzugsweise durch jeweils zwei Viergelenkpaare 25 gebildet, von denen jedes zwei parallele Lenker L1 und L2 umfassen kann. Der Stützrahmen 22 und die Deckelaußenhaut 23 können außerdem so miteinander gekoppelt und voneinander entkoppelt werden, dass - in gekoppeltem Zustand - der gesamte Deckel 18 entgegen der Fahrtrichtung Fr zu öffnen ist, wie dies Fig. 1 zeigt, und - in entkoppeltem Zustand - lediglich die Deckelaußenhaut 23 (Fig. 2) geöffnet werden kann, wodurch ein unter der Deckelaußenhaut liegender Aufnahmeraum 26 freigebbar ist, in dem beispielsweise ein Antriebsmotor, insbesondere eine Brennkraftmaschine, des Kraftfahrzeugs 1 angeordnet sein kann. Der Aufnahmeraum 26 kann jedoch auch ein Kofferraum darstellen. Stauraum Sr, Verdeckkasten 17 und Aufnahmeraum 26 liegen - in dieser Reihenfolge - hintereinander, wobei der Aufnahmeraum 26 und der Verdeckkasten 17 von demselben Deckel 18 verschlossen werden, der somit einen Heckdeckel bildet. Es ist jedoch auch möglich, den Aufnahmeraum 26 und den Verdeckkasten 17 jeweils mit einem separaten Deckel zu verschließen.

Bei dem wiedergegebenen Ausführungsbeispiel des Daches 7 ist die Ablagekonsole 20 fest bzw. unbeweglich an dem Stützrahmen 22 gehalten, wodurch die Deckelaußenhaut 23 geöffnet werden kann, ohne die Heckscheibe 16 oder den Heckabschnitt 12 zu verlagern und die Ablagekonsole 20 zu verschwenken. Der Stützrahmen 22 besitzt überdies einen vorderen und hinteren Rahmenschenkel 27 bzw. 28, die über seitliche Rahmenschenkel 29 verbunden sind. Die Ablagekonsole 20 ist vorzugsweise am vorderen Rahmenschenkel 27 angeordnet. Ferner weist die Ablagekonsole 20 eine Breite B auf, so dass sie zwischen den Seitenteilen 13 und 14 aus dem Fahrgastraum 8 herausbewegt werden kann. Bei größerer Breite B könnten die Seitenteile 13 und 14 ggf. weggeschwenkt werden, um den Schwenkbereich 21 freizugeben.

Die beiden seitlichen Rahmenschenkel 29 des Stützrahmens 22 weisen jeweils einen Durchbruch 30 auf, der von einem Stützelement bzw. Antriebselement 31 durchgriffen wird, welches an seinem einen Ende mit der Deckelaußenhaut 23 und an seinem anderen Ende am Aufbau 3 angebunden ist. Das Antriebselement 31 kann beispielsweise ein Hydraulikzylinder sein, der ein automatisches Öffnen des Deckels 18 ermöglicht. Sind Stützrahmen 22 und Deckelaußenhaut 23 miteinander gekoppelt, kann der gesamte Deckel 18 über das Antriebselement 31 geöffnet werden. Ist die Deckelaußenhaut 23 vom Stützrahmen 22 entkoppelt bzw. gelöst, bewirkt das Antriebselement 31 lediglich ein Öffnen der Deckelaußenhaut 23. Anstelle des Antriebselement 31 könnte eine Stützeinrichtung vorgesehen sein, die beispielsweise durch eine Gasfeder gebildet ist, die den geöffneten Deckel 18 bzw. Deckelaußenhaut 23 in entsprechender Klappstellung hält.

## Patentansprüche

1. Kraftfahrzeug mit einem beweglichen Dach (7), das einen vorderen Dachabschnitt (10) und einen Heckabschnitt (12) besitzt, wobei das Dach in Schließstellung einen Fahrgastraum (8) überspannt und in eine heckseitige Ablagestellung bewegbar ist, in welcher Ablagestellung das Dach von einem nach oben offenen und durch einen schwenkbaren Deckel (18) verschließbaren Verdeckkasten (17) aufgenommen ist, an welchem Deckel (18) eine in den Fahrgastraum ragende Ablagekonsole (20) angeordnet ist, wobei die Ablagekonsole (20) fest mit dem Deckel (18) verbunden ist und mit diesem mitschwenkt, **dadurch gekennzeichnet, dass** dass in Schließstellung (St) des Daches (7) und bei zu öffnendem Verdeckkasten (17) der Heckabschnitt (12) zumindest teilweise aus dem Schwenkbereich (21) der Ablagekonsole (20) herausverlagert wird.

2. Kraftfahrzeug nach Anspruch 1, **dadurch gekennzeichnet, dass** die Ablagekonsole (20) bei geschlossenem Deckel (18) einen hinter Fahrzeugsitzen liegenden Stauraum (Sr) nach oben hin wenigstens teilweise verschließt.

3. Kraftfahrzeug nach Anspruch 1 oder 2, **dadurch gekennzeichnet, dass** die Ablagekonsole (20) eine Hutablage bildet.

4. Kraftfahrzeug nach einem der vorhergehenden Ansprüche, **dadurch gekennzeichnet, dass** der Deckel (18) einen innenliegenden Stützrahmen (22) und eine Deckelaußenhaut (23) umfasst und dass der Stützrahmen (22) und die Deckelaußenhaut (23) miteinander lösbar gekoppelt sind derart, dass der Deckel (18) zum Ablegen des Daches (7) entgegen der Fahrtrichtung (Fr) und zum Freigeben eines heckseitigen Aufnahmeraums (26) die Deckelaußenhaut (23) entkoppelt vom Stützrahmen (22) in Fahrtrichtung (Fr) öffenbar ist.

5. Kraftfahrzeug nach Anspruch 4, **dadurch gekennzeichnet, dass** die Ablagekonsole (20) starr mit dem Stützrahmen (22) verbunden ist.

6. Kraftfahrzeug nach Anspruch 1, **dadurch gekennzeichnet, dass** der Heckabschnitt (12) des Daches (7) eine Heckscheibe (16) umfasst, die bei geschlossenem Dach (7) unter den vorderen Dachabschnitt (10) verlagerbar ist, wodurch der Schwenkbereich (21) der Ablagekonsole (20) freigegeben ist.

## Claims

1. Motor vehicle with a movable roof (7) which has a front roof section (10) and a rear section (12), wherein the roof, in the closed position, spans a passenger compartment (8) and can be moved into a stowage position at the rear, in which stowage position the roof is received by a folding-top compartment (17) which is upwardly open and can be closed by means of a pivotable cover (18), on which cover (18) a stowage console (20) which protrudes into the passenger compartment is arranged, wherein the stowage console (20) is connected fixedly to the cover (18) and pivots together therewith, **characterized in that**, in the closed position (St) of the roof (7) and when the folding-top compartment (17) is to be opened, the rear section (12) is at least partially displaced out of the pivoting range (21) of the stowage console (20).

2. Motor vehicle according to Claim 1, **characterized in that**, when the cover (18) is closed, the stowage console (20) at least partially upwardly closes a storage space (Sr) located behind vehicle seats.

3. Motor vehicle according to Claim 1 or 2, **characterized in that** the stowage console (20) forms a rear parcel shelf.

4. Motor vehicle according to one of the preceding claims, **characterized in that** the cover (18) comprises an inner supporting frame (22) and an outer cover skin (23), and **in that** the supporting frame (22) and the outer cover skin (23) are coupled releasably to each other in such a manner that the cover (18) can be opened counter to the direction of travel (Fr) in order to stow the roof (7), and the outer cover skin (23), decoupled from the supporting frame (22), can be opened in the direction of travel (Fr) in order to release a receiving space (26) at the rear.

5. Motor vehicle according to Claim 4, **characterized in that** the stowage console (20) is connected rigidly to the supporting frame (22).

6. Motor vehicle according to Claim 1, **characterized in that** the rear section (12) of the roof (7) comprises a rear window (16) which, when the roof (7) is closed, can be displaced under the front roof section (10), thus releasing the pivoting range (21) of the stowage console (20).

## Revendications

1. Véhicule automobile comprenant un toit amovible (7), qui possède une portion de toit avant (10) et une portion de toit arrière (12), le toit surmontant dans la position fermée un habitacle de conduite (8), et pouvant être déplacé dans une position de rangement à l'arrière, dans laquelle le toit est reçu par un compartiment de capote (17) ouvert vers le haut et pouvant être fermé par un couvercle pivotant (18), sur lequel couvercle (18) est disposée une console de rangement (20) pénétrant dans l'habitacle de conduite, la console de rangement (20) étant connectée fixement au couvercle (18) et pivotant en même temps que lui, **caractérisé en ce que** dans la position de fermeture (St) du toit (7), et lorsque le compartiment de capote (17) doit être ouvert, la portion arrière (12) est décalée au moins en partie hors de la région de pivotement (21) de la console de rangement (20).

2. Véhicule automobile selon la revendication 1,
**caractérisé en ce que** la console de rangement (20), lorsque le couvercle (18) est fermé, ferme au moins en partie vers le haut un compartiment à bagages (Sr) situé derrière les sièges du véhicule.

3. Véhicule automobile selon la revendication 1 ou 2, **caractérisé en ce que** la console de rangement (20) forme une plage arrière.

4. Véhicule automobile selon l'une quelconque des revendications précédentes, **caractérisé en ce que** le couvercle (18) comprend un cadre de support intérieur (22) et une peau extérieure de couvercle (23), et **en ce que** le cadre de support (22) et la peau extérieure de couvercle (23) sont accouplés l'un à l'autre de manière amovible de telle sorte que le couvercle (18), pour ranger le toit (7), puisse être ouvert à l'encontre de la direction de conduite (Fr) et que, pour libérer un compartiment de réception arrière (26), la peau extérieure de couvercle (23), désaccouplée du cadre de support (22), puisse être ouverte dans la direction de conduite (Fr).

5. Véhicule automobile selon la revendication 4, **caractérisé en ce que** la console de rangement (20) est connectée rigidement au cadre de support (22).

6. Véhicule automobile selon la revendication 1, **caractérisé en ce que** la portion arrière (12) du toit (7) comprend une vitre arrière (16), qui peut être déplacée sous la portion de toit avant (10) lorsque le toit (7) est fermé, de sorte que la région de pivotement (21) de la console de rangement (20) soit libérée.
